# EUROPÄISCHE PATENTSCHRIFT

(11) **EP 0 787 916 B1**
(45) Veröffentlichungstag und Bekanntmachung des Hinweises auf die Patenterteilung: **18.08.1999**
(21) Anmeldenummer: 97101178.8
(22) Anmeldetag: 25.01.1997
(51) Int. Cl.: F16C 35/00

(54) **Festlager**
Rigid bearing support
Support rigid de paliers

(30) Priorität: 01.02.1996 DE 19603599
(43) Veröffentlichungstag der Anmeldung: 06.08.1997
(73) Patentinhaber: ZF FRIEDRICHSHAFEN Aktiengesellschaft, 88038 Friedrichshafen (DE)
(72) Erfinder: Boss, Ralf, 88079 Kressbronn (DE)

(56) Entgegenhaltungen:
- EP-A- 0 244 351
- WO-A-83/01586
- US-A- 5 052 829

## Beschreibung

Die Erfindung bezieht sich auf ein Festlager zur Aufnahme von Gewichts- und Beschleunigungskräften und zur Zentrierung der zu lagernden Elemente bei der Montage. Festlager zur Abstützung von zu lagernden Elementen sind in den verschiedensten Ausführungen bekannt. Sie dienen zur Fixierung der zu lagernden Elemente im Raum. In der Regel nehmen sie Gewichtskräfte auf. Bei Lagerung von Elementen in beweglichen Objekten treten neben Gewichtskräfen Beschleunigungskräfte auf. Diese können die Gewichtskräfte bei weitem übersteigen und treten, je nach Bewegung, in allen drei Raumrichtungen auf. Die Lager müssen dann derart aufgebaut sein, daß sie Kräfte in allen Richtungen abstützen können. Stationäre Lager von bewegten Maschinenteilen, die unwuchtig laufen, müssen ebenfalls Beschleunigungskräfte aufnehmen. Solche Festlager zur Halterung von Aggregaten und beweglichen Maschinenteilen finden im Maschinenbau, Fahrzeugbau, Schiffbau usw. Anwendung.

Aus der US-A-5,052,829 ist eine Lageranordnung mit einem Lagerbock und einem Lager bekannt, wobei das Lager an der radial äußeren Mantelfläche Schlitze aufweist, in die konkav gekrümmte Zungen des Lagerbocks eingreifen. Das für die Montage erforderliche Axialspiel zwischen den Zungen des Lagerbocks und den Schlitzen in der äußeren Mantelfläche des Lagers wird als nachteilig erachtet.

Der Erfindung liegt daher die Aufgabe zugrunde, ein Festlager zu schaffen, das die Gewichtskraft eines zu lagernden Elements und dessen Beschleunigungskräfte in allen Richtungen abstützt und das aufgrund seiner Formgebung das zu lagernde Element beim Einbau radial und axial zentriert und infolge seines einfachen Aufbaus eine schnelle Montage und Demontage ermöglicht.

Diese Aufgabe wird erfindungsgemäß durch ein die Merkmale des Anspruchs 1 aufweisendes Festlager gelöst.

Das Festlager besteht aus einem Lagerbock, der an einem Träger oder an einer Bodenplatte befestigt ist, und einem Ringlager, das vorzugsweise aus einem oder mehreren Lagerringen und einer Lagerschale zusammengesetzt ist. Das zu lagernde Element, z. B. ein Triebwerk, wird an seinem Gehäuse von einem Lagerring umfaßt. Zwei Gehäusehälften sind am Ort des Lagerrings axial gegeneinander verspannt, wobei diese vorzugweise zwei Lagerringe eines zweiteilig ausgeführten Ringlagers gegeneinander verspannen, indem sie auf Anschlagflächen der Lagerringe drücken. Dieses Element wird derart auf dem Lagerbock aufgesetzt, daß das Ringlager in senkrechter Einbaulage auf der Oberseite des Lagerbocks aufliegt. Diese Oberseite des Lagerbocks ist gleichmäßig konkav gekrümmt, wobei der Krümmungsradius gleich oder annähernd gleich dem Außenradius des Ringlagers im Bereich der Lagerschale ist, so daß dieses paßgenau auf dem Lagerbock aufgesetzt werden kann und dadurch radial zentriert wird. Zur Zentrierung und Abstützung in axialer Richtung besitzen Lagerbock und Lagerschale gemeinsame Flächen, die Kräfte in axialer Richtung aufnehmen können. Diese Flächen sind Seitenflächen eines trapezförmig sich nach oben verjüngenden Steges, der auf der Oberseite des Lagerbocks in Umfangsrichtung verläuft und in eine Aussparung an der Unterseite der Lagerschale eingreift. Diese schrägen Seitenflächen sind insbesondere für eine schnelle axiale Justierung und Fixierung bei der Montage vorteilhaft. Gleichermaßen kann in einer alternativen Ausgestaltung der Erfindung analog ein Steg auf der Unterseite der Lagerschale des Ringlagers in eine trapezförmig sich nach unten verjüngende Aussparung im Lagerbock eingreifen.

Zur schnellen Montage und Demontage des zu lagernden Elements sollen möglichst wenig Teile verbunden und gelöst werden. In einer vorteilhaften Ausgestaltung der Erfindung werden Lagerbock und Ringlager mit einer einzigen Schraube verbunden, die von unten durch den Lagerbock durchgesteckt wird und in ein Gewinde des Ringlagers eingreift. Diese Schraube hält das Element in seinem Lagersitz und nimmt zusätzlich vertikal nach oben gerichtete Beschleunigungskräfte auf.

Vorteilhaft besitzt das Ringlager, vorzugweise aus Lagerring und Lagerschale bestehend, über den Teil seines Umfangs, der auf dem Lagerbock aufsitzt, eine größere radiale und/oder axiale Ausdehnung. Dies gilt insbesondere in dem Fall der im Ringlager verlaufenden Aussparung, um eine hinreichende Stabilität zu gewährleisten. Das Ringlager weitet sich vorzugsweise in diesem Umfangsbereich schräg zur Seite und nach unten auf, so daß es dort den Querschnitt eines auf den Kopf gestellten Ypsilons aufweist.

Der Lagerbock, das Ringlager und die Schraube zur Befestigung des Ringlagers sollten vorzugsweise aus Materialen mit gleichem Wärmeausdehnungskoeffizienten sein, damit die Kraft auf die Schraube nicht von der Temperatur abhängig ist und das Gewinde im Ringlager nicht ständigen temperaturabhängigen Lastwechseln unterworfen ist. Vorteilhafterweise bestehen Lagerbock, Ringlager und Schraube aus demselben Material, vorzugsweise Stahl.

In einer vorteilhaften Ausgestaltung der Erfindung ist der Lagerbock auf einer Bodenplatte befestigt, vorzugsweise aufgeschraubt. Diese kann in unmittelbarer Umgebung des Lagerbocks durch eine kraftschlüssig befestigte, insbesondere aufgeschweißte Grundplatte verstärkt sein. Die Schraube zur Befestigung des Ringlagers auf dem Lagerbock wird vorzugsweise von unten durch ein Loch in der Bodenplatte durchgesteckt.

Um ein günstiges Klemmlängenverhältnis zu erzielen, wird der Lagerbock vorzugsweise in unmittelbarer Umgebung der Schraube nach unten verlängert. In einer vorteilhaften Ausgestaltung der Erfindung ist der Lagerbock durch eine eingesetzte Büchse, die in ein Loch der Bodenplatte eingesteckt ist, nach unten verlängert, durch die die Schraube durchgesteckt wird. Ringlager, Lagerbock, Büchse und Schraube sind vorzugweise aus demselben Material gefertigt und bilden zusammen einen temperaturunabhängigen Kraftverbund.

Die Zylinderbüchse kann vorzugsweise zur Zentrierung des Lagerbocks auf der Bodenplatte dienen. Vorzugsweise kann die Zylinderbüchse einen Kragen besitzen, mit dem sie sich nach oben in einer Senkung des Lagerbocks gegen diesen abstützt. Vorteilhafterweise erstreckt sie sich nur so weit nach unten in das Loch der Bodenplatte hinein, daß die Schraube zur Befestigung des Lagerrings nicht aus dem Loch der Bodenplatte nach unten hervorsteht.

Die oben beschriebenen Ausgestaltungen der Erfindung zeigen sich insbesondere bei der Lagerung des Triebswerks eines Fahrzeugs, insbesondere eines geländegängigen Schwerfahrzeugs von Vorteil, bei dem das Triebwerk innerhalb kürzester Zeit unter schwierigen Bedingungen gewechselt werden muß. Damit muß nur eine einzige Schraube auf der Fahrzeugunterseite gelöst werden und das gesamte Treibwerk mit Ringlager kann nach oben durch eine Fahrzeugöffnung herausgenommen werden. Danach wird das Austauschtriebwerk herabgelassen, zentriert sich beim Eingleiten des Ringlagers in den Lagerbock infolge seiner konkaven Form einerseits und des trapezförmigen Steges andererseits von selbst und wird durch das Eindrehen einer einzigen Schraube von der Fahrzeugunterseite befestigt.

Ein Ausführungsbeispiel der Erfindung ist in Zeichnungen dargestellt und wird im folgenden näher beschrieben. Es zeigen:

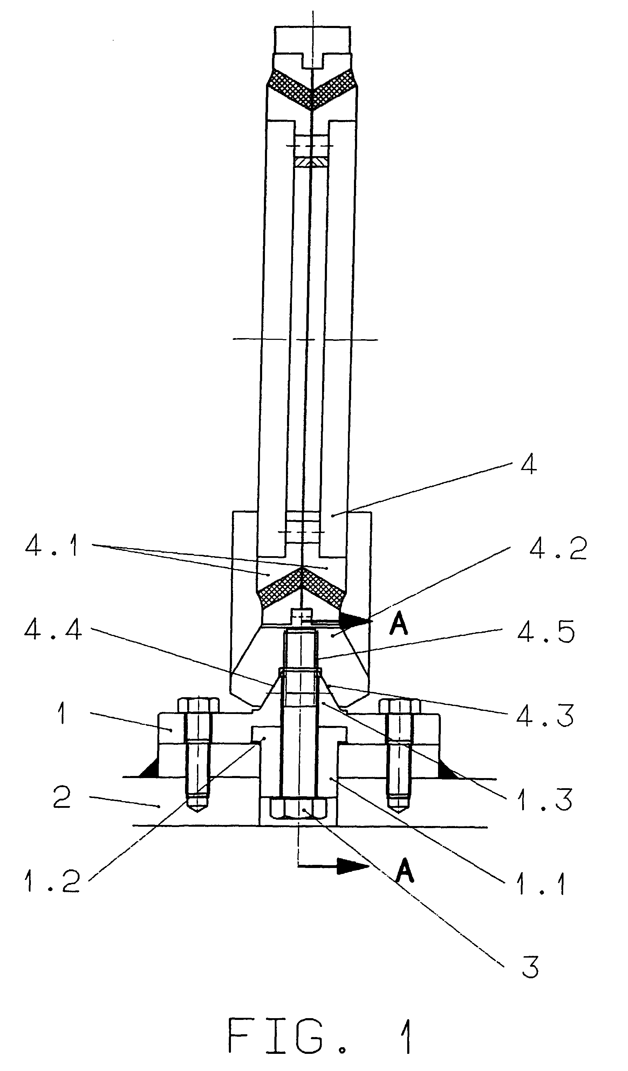

- Fig. 1: einen Schnitt durch das Festlager mit Lagerbock und Ringlager, der durch die vertikal nach oben gerichtete Raumachse und die Zylinderachse des Ringlagers aufgespannt wird und

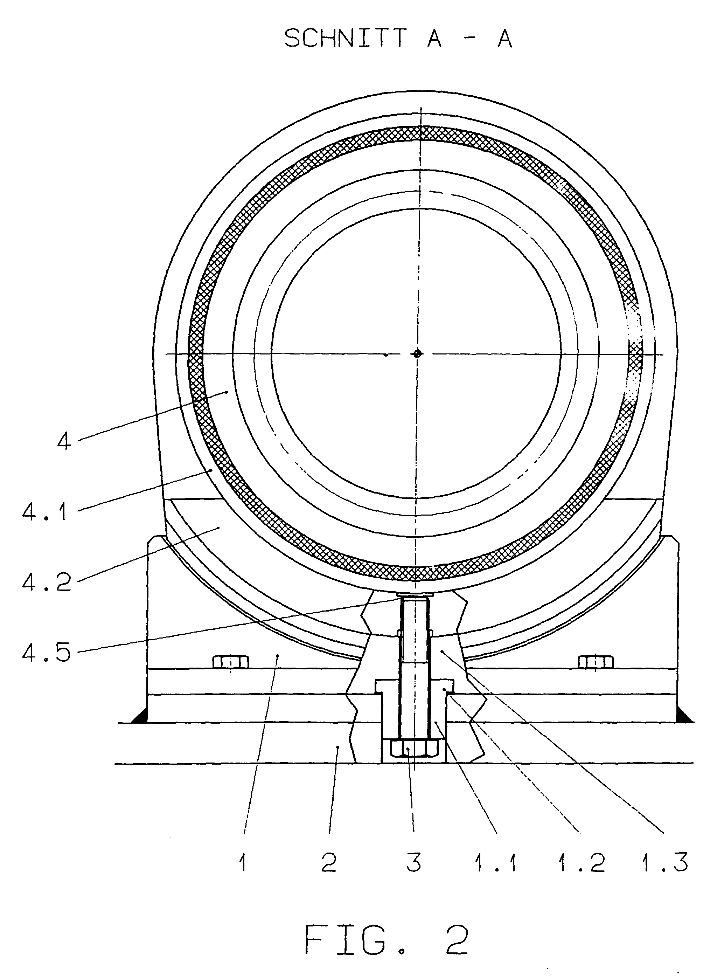

- Fig. 2: einen Schnitt durch das Festlager senkrecht zur Zylinderachse.

Ein mehrstückig ausgebildeter Lagerbock 1 ist auf der Bodenplatte 2 eines Fahrzeuges festgeschraubt. In den Lagerbock 1 ist eine Zylinderbüchse 1.1 eingesetzt. Letztere ist in ein Durchgangsloch der Bodenplatte 2 des Fahrzeuges eingesteckt. Die Zylinderbüchse 1.1 besitzt an ihrem oberen Ende einen Kragen 1.2, der in ein Sackloch des Lagerbocks 1 formschlüssig eingreift. Der Kragen 1.2, der einen größeren Durchmesser als das Durchgangsloch der Bodenplatte hat, hindert die Zylinderbüchse 1.1 am Herausfallen nach unten. Die Zylinderbüchse 1.1 und der Lagerbock 1 haben eine Durchführung für eine Schraube 3. Auf dem Lagerbock 1 ist ein Ringlager 4 aufgesetzt. Das Ringlager 4 ist aus zwei gegeneinander verspannten Lagerringen 4.1 und einer Lagerschale 4.2 zusammengesetzt. Der Lagerbock 1 besitzt auf seiner Oberseite einen trapezförmig sich nach oben verjüngenden Steg 1.3, der in eine Aussparung 4.3 der Lagerschale 4.2 eingreift und das Ringlager 4 axial zentriert und abstützt. Das Ringlager 4 ist in seinem Auflagebereich 4.4 auf dem Lagerbock 1 radial und axial nach außen verstärkt, so daß er im Querschnitt einem auf den Kopf gestellten Ypsilon gleicht.

Bei der Montage eines von dem Ringlager 4 umspannten, zu lagernden Elements, beispielsweise eines Triebwerks, wird dieses von oben auf den Lagerbock 1 herabgelassen, zentriert sich beim Eingleiten des Ringlagers 4 in den Lagerbock 1 infolge dessen konkaver Oberseite einerseits und des trapezförmigen Steges 1.3 andererseits von selbst und wird durch das Eindrehen der Schraube 3, die von der Fahrzeugunterseite durch die Bodenplatte 2 in der Zylinderbüchse 1.1 durchgesteckt wird, in ein Gewindeloch 4.5 des Ringlagers 4 befestigt.

### Bezugszeichen

- 1: Lagerbock
- 1.1: Zylinderbüchse
- 1.2: Kragen
- 1.3: Steg
- 2: Bodenplatte
- 3: Schraube
- 4: Ringlager
- 4.1: Lagerring
- 4.2: Lagerschale
- 4.3: Aussparung
- 4.4: Auflagebereich
- 4.5: Gewindeloch

## Patentansprüche

1. Festlager mit einem Lagerbock (1), der an einem Träger oder einer Bodenplatte befestigt ist, wobei der Lagerbock (1) an seiner Oberseite eine gleichmäßig konkav gekrümmte Lagerfläche hat, auf der ein senkrecht stehendes, das zu lagernde Element umfassendes Ringlager (4) mit einem Außenradius gleich oder annähernd gleich dem Krümmungsradius der Lagerfläche aufgesetzt ist, wobei Lagerbock (1) und Ringlager (4) als Auflagebereich (4.4) gemeinsame Flächen besitzen, die Kräfte in radialer und axialer Richtung aufnehmen können, dadurch **gekennzeichnet,** daß der Lagerbock (1) auf seiner Oberseite einen trapezförmig sich nach oben verjüngenden, in Umfangsrichtung verlaufenden Steg (1.3) besitzt, der in eine Aussparung (4.3) auf der Mantelfläche des Ringlagers (4) formschlüssig eingreift oder eine trapezförmig sich nach unten verjüngende, in Umfangsrichtung verlaufende Aussparung besitzt, in die ein Steg auf der Mantelfläche des Ringlagers (4) formschlüssig eingreift und dieses axial zentriert.

2. Festlager nach Anspruch 1, dadurch **gekennzeichnet,** daß Lagerbock (1) und Ringlager (4) mit einer einzigen Schraube (3) miteinander verschraubt sind, die von unten durch den Lagerbock (1) durchgesteckt in ein Gewindeloch (4.5) des Ringlagers (4) eingreift.

3. Festlager nach Anspruch 1, dadurch **gekennzeichnet,** daß das Ringlager (4) über den Teil seines Umfangs, der auf dem Lagerbock (1) aufsitzt, eine größere radiale und/oder axiale Ausdehnung besitzt.

4. Festlager nach Anspruch 3, dadurch **gekennzeichnet,** daß das Ringlager (4) in diesem Umfangsbereich einen Y förmigen Querschnitt besitzt.

5. Festlager nach Anspruch 1, dadurch **gekennzeichnet,** daß der Lagerbock (1), das Ringlager (4) und die Schraube (3) aus dem selben Material, vorzugsweise Stahl, oder einem Material mit gleichem Wärmeausdehnungskoeffizienten bestehen.

6. Festlager nach Anspruch 1, dadurch **gekennzeichnet,** daß das Ringlager (4) aus einem oder mehreren Lagerringen (4.1) und einer Lagerschale (4.2) zusammengesetzt ist.

7. Festlager nach Anspruch 2, dadurch **gekennzeichnet**, daß der Lagerbock (1) auf der Bodenplatte (2) eines Fahrzeuges befestigt ist, und letztere ein Durchgangsloch besitzt, wobei eine Zylinderbüchse (1.1) in das Durchgangsloch der Bodenplatte (2) und eine Senkung des Lagerbocks (1) eingesteckt ist, so daß die Schraube (3) zur Befestigung des Ringlagers (4) auf dem Lagerbock (1) durch diese Zylinderbüchse (1.1) von der Unterseite des Fahrzeuges leicht zugänglich eingesteckt werden kann.

8. Festlager nach Anspruch 7, dadurch **gekennzeichnet,** daß die Zylinderbüchse (1.1) einen Kragen (1.2) besitzt, mit dem sie sich nach oben in einem Sackloch des Lagerbocks (1) gegen diesen abstützt und sich nur so weit nach unten in das Loch der Bodenplatte (2) hinein erstreckt, daß die Schraube (3) zur Befestigung des Ringlagers (4) nicht aus dem Loch der Bodenplatte (2) nach unten hervorsteht.

## Claims

1. Locating bearing having a bearing block (1), which is fastened to a carrier or a base plate, wherein the bearing block (1) at its top side has a bearing surface with a uniformly concave curvature, on which is mounted a perpendicular sleeve bearing (4) embracing the element to be supported and having an external radius equal or approximately equal to the radius of curvature of the bearing surface, wherein bearing block (1) and sleeve bearing (4) possess as supporting region (4.4) common surfaces, which are capable of taking up forces in radial and axial direction, characterized in that the bearing block (1) at its top side possesses a web (1.3) tapering trapezoidally upwards and extending in peripheral direction, which engages positively into a recess (4.3) in the lateral surface of the sleeve bearing (4), or possesses a recess tapering trapezoidally downwards and extending in peripheral direction, into which a web on the lateral surface of the sleeve bearing (4) positively engages and axially centres the sleeve bearing.

2. Locating bearing according to claim 1, characterized in that bearing block (1) and sleeve bearing (4) are screwed to one another by means of a single screw (3), which is inserted from below through the bearing block (1) and engages into a threaded hole (4.5) of the sleeve bearing (4).

3. Locating bearing according to claim 1, characterized in that the sleeve bearing (4) has a greater radial and/or axial extension over the part of its periphery which is seated on the bearing block (1).

4. Locating bearing according to claim 3, characterized in that the sleeve bearing (4) in said peripheral region has a Y-shaped cross section.

5. Locating bearing according to claim 1, characterized in that the bearing block (1), the sleeve bearing (4) and the screw (3) are made of the same material, preferably steel, or a material having an identical coefficient of thermal expansion.

6. Locating bearing according to claim 1, characterized in that the sleeve bearing (4) is composed of one or more bearing rings (4.1) and a bearing shell (4.2).

7. Locating bearing according to claim 2, characterized in that the bearing block (1) is fastened to the base plate (2) of a vehicle, and said base plate has a through-hole, wherein a cylinder liner (1.1) is inserted into the through-hole of the base plate (2) and a counterbore of the bearing block (1) so that the screw (3) for fastening the sleeve bearing (4) to the bearing block (1) may in an easily accessible manner be inserted through said cylinder liner (1.1) from the underside of the vehicle.

8. Locating bearing according to claim 7, characterized in that the cylinder liner (1.1) possesses a collar (1.2), by means of which it is supported in an upward direction in a blind hole of the bearing block (1) against the latter, and extends down into the hole of the base plate (2) only to such an extent that the screw (3) for fastening the sleeve bearing (4) does not protrude downwards out of the hole of the base plate (2).

## Revendications

1. Palier fixe avec un support de palier (1), fixé à un support ou une plaque de base, le support de palier (1) présentant à sa face supérieure une surface de portée à courbure uniformément concave sur laquelle est posé, en position débout, un palier annulaire (4) entourant l'élément à loger, avec un rayon extérieur égal ou approximativement égal au rayon de courbure de la surface de portée, le support de palier (1) et le palier annulaire (4) possédant, en tant que zone d'appui (4.4), des surfaces communes pouvant absorber des forces dans le sens radial et axial, **caractérisé** en ce que le support de palier (1) possède sur sa face supérieure une nervure (1.3) se rétrécissant de façon trapézoïdale vers le haut, s'étendant dans le sens périphérique, qui s'engage, par fermeture géométrique, dans un évidement (4.3) sur la surface de l'enveloppe du palier annulaire (4), ou possède un évidement se rétrécissant de façon trapézoïdale vers le bas, s'étendant dans le sens périphérique, dans lequel une nervure sur la surface de l'enveloppe du palier annulaire (4) s'engage par fermeture géométrique et centre celui-ci dans le sens axial.

2. Palier fixe selon la revendication 1, **caractérisé** en ce que le support de palier (1) et le palier annulaire (4) sont reliés entre eux par une seule vis (3) passant par le bas à travers le support de palier (1) et étant en prise dans un trou fileté (4.5) du palier annulaire (4).

3. Palier fixe selon la revendication 1, **caractérisé** en ce que le palier annulaire (4) possède une plus grande étendue radiale et/ou axiale sur la partie de sa périphérie qui est posée sur le support de palier(1).

4. Palier fixe selon la revendication 3, **caractérisé** en ce que le palier annulaire (4) possède, dans cette zone périphérique, une section transversale en forme de « Y ».

5. Palier fixe selon la revendication 1, **caractérisé** en ce que le support de palier (1), le palier annulaire (4) et la vis (3) sont fabriqués dans le même matériau, de préférence de l'acier, ou dans un matériau ayant le même coefficient de dilatation thermique.

6. Palier fixe selon la revendication 1, **caractérisé** en ce que le palier annulaire (4) se compose d'un ou plusieurs anneaux de palier (4.1) et d'un coussinet de palier (4.2).

7. Palier fixe selon la revendication 2, **caractérisé** en ce que le support de palier (1) est fixé sur le plancher (2) d'un véhicule, ce dernier comportant un trou de passage, une douille cylindrique (1.1) étant introduite dans le trou de passage du plancher (2) et un abaissement du support de palier (1), de façon à ce que la vis (3) pour fixer le palier annulaire (4) sur le support de palier (1) puisse être passée à travers cette douille cylindrique (1.1) facilement accessible à partir du dessous du véhicule.

8. Palier fixe selon la revendication 7, **caractérisé** en ce que la douille cylindrique (1.1) possède un collet (1.2) par lequel elle s'appuie vers le haut dans un trou borgne du support de palier (1) contre celui-ci et ne s'étend vers le bas du trou du plancher (2) qu'assez loin pour que la vis (3), destinée à fixer le palier annulaire (4), ne sorte pas vers le bas du trou du plancher (2).
